# EUROPÄISCHE PATENTANMELDUNG

(11) **EP 4 201 588 A1**
(43) Veröffentlichungstag der Anmeldung: **28.06.2023**
(21) Anmeldenummer: 21217579.8
(22) Anmeldetag: 23.12.2021
(51) Int. Cl.: B23Q 11/00, B23C 5/10

(54) **FRÄSWERKZEUG FÜR EINE DENTALFRÄSMASCHINE UND ANORDNUNG AUS EINER FRÄSSPINDEL UND EINEM FRÄSWERKZEUG**

(71) Anmelder: VHF Camfacture AG, 72119 Ammerbuch (DE)
(72) Erfinder: BUTSCHAN, Jens, 73760 Ostfildern (DE)
(74) Vertreter: Zurhorst, Stefan

(57) **Zusammenfassung**

Die Erfindung betrifft ein Fräswerkzeug für eine Dentalfräsmaschine, umfassend einen Grundkörper (11) mit einer Drehachse (12). An dem ersten Ende (13) des Grundkörpers (11) ist ein Schaft (15) zum Einspannen des Fräswerkzeuges (10) vorgesehen. An dem zweiten Ende (14) des Grundkörpers (11) ist eine Schneide (16) angeordnet. An dem Grundkörper (11) zwischen dem Schaft (15) und der Schneide (15) ist ein Aufnahmeabschnitt (17) vorgesehen. An dem Aufnahmeabschnitt (17) des Grundkörpers (11) ist ein Gebläserad (20) angeordnet. Das Gebläserad (20) ist derart ausgebildet, dass bei Antrieb des Fräswerkzeuges (10) in einer zum Spanabtrag vorgesehenen Drehrichtung (19) durch das Gebläserad (20) ein Luftstrom (25) in Richtung vom Gebläserad (20) hin zur Schneide (16) des Fräswerkzeuges (10) erzeugt wird.

## Beschreibung

Die Erfindung betrifft ein Fräswerkzeug für eine Dentalfräsmaschine gemäß dem Oberbegriff des Anspruchs 1. Zudem betrifft die Erfindung eine Anordnung aus einer Frässpindel und einem Fräswerkzeug.

Zur Herstellung von Zahnersatz, z. B. Kronen, Brücken oder dgl., werden in Dentalfräsmaschinen Rohlinge aus verschiedenen Materialien spanend bearbeitet. Der Fertigungsprozess setzt sich dabei aus mehreren Bearbeitungsvorgängen zusammen, z. B. Fräsen, Schleifen, Polieren. Bei der spanenden Bearbeitung entstehen Späne oder Schneid- bzw. Polierstaub, der sich auf dem Werkstück sowie in der Bearbeitungsmaschine ablegt. Setzt sich das Werkstück mit Spänen oder dem Bearbeitungsstaub zu, kann dies zu einer Beschädigung des Fräswerkzeuges und des Werkstückes führen. Um Beschädigungen wie beispielsweise einen Werkzeugbruch zu vermeiden, wird das Werkstück während der Bearbeitung mit Druckluft gereinigt. Als Druckluftquelle dienen entsprechende Druckluftkompressoren, die entweder in der Bearbeitungsmaschine oder als externe Standalone-Lösung vorgesehen sind. Derartige Druckluftsysteme sind wartungsintensiv und kostspielig. Sind die Druckluftkompressoren in der Bearbeitungsmaschine integriert, nehmen diese Bauraum ein. Sind Standalone-Lösungen vorgesehen, werden Stellflächen benötigt.

Der Erfindung liegt die Aufgabe zugrunde, ein Mittel zur Simplifizierung einer Dentalfräsmaschine anzugeben.

Die Aufgabe bezüglich des Mittels zur Simplifizierung einer Dentalfräsmaschine wird mit einem Fräswerkzeug für eine Dentalfräsmaschine nach den Merkmalen des Anspruchs 1 gelöst. Ferner wird selbige Aufgabe auch durch eine Anordnung aus einer Frässpindel und einem solchen Fräswerkzeug nach den Merkmalen des Anspruchs 15 gelöst.

Das Fräswerkzeug für eine Dentalfräsmaschine umfasst einen Grundkörper mit einer Drehachse. Der Grundkörper erstreckt sich entlang seiner Drehachse von einem ersten Ende bis zu einem zweiten Ende. An dem ersten Ende des Grundkörpers ist ein Schaft zum Einspannen des Fräswerkzeugs vorgesehen. Am zweiten Ende des Grundkörpers ist eine Schneide angeordnet. An dem Grundkörper zwischen dem Schaft und der Schneide ist ein Aufnahmeabschnitt vorgesehen. An dem Aufnahmeabschnitt des Grundkörpers ist ein Gebläserad angeordnet. Das Gebläserad ist derart ausgebildet, dass bei Antrieb des Fräswerkzeuges in eine zum Spanabtrag vorgesehene Drehrichtung durch das Gebläserad ein Luftstrom in Richtung vom Gebläserad hin zur Schneide des Fräswerkzeuges erzeugt wird.

Im Betrieb des Fräswerkzeuges ist das Fräswerkzeug in einer Werkzeugaufnahme der Frässpindel gehalten. Das Fräswerkzeug wird in eine Drehrichtung angetrieben, in der die Schneide des Fräswerkzeuges das Werkstück zerspant. Dabei erzeugt das Gebläserad einen Luftstrom, der auf das Werkstück gerichtet ist. Die auf dem Werkstück befindlichen Späne und/oder Staub werden durch den Luftstrom von dem Werkstück heruntergeblasen. Eine Beschädigung des Fräswerkzeuges und des Werkstückes kann somit vermieden werden.

Der durch das Gebläserad induzierte Luftstrom befreit das Werkstück effektiv von Spänen und/oder Staub, so dass auf einen herkömmlichen Druckluftanschluss verzichtet werden kann. Demnach kann auch auf die entsprechende Druckluftquelle verzichtet werden. Die mit einem herkömmlichen Druckluftsystem verbundenen, oben genannten Nachteile können vermieden werden.

Das Gebläserad weist vorzugsweise mehrere Schaufeln auf, wobei in Umfangsrichtung der Drehachse benachbarte Schaufeln in gleichmäßigem Winkelabstand um die Drehachse des Grundkörpers angeordnet sind. Somit kann ausreichend Druckluft bereitgestellt werden. In besonders vorteilhafter Ausführung umfasst das Gebläserad sechs Schaufeln.

Das Gebläserad weist eine Nabe auf, wobei das Gebläserad vorzugsweise mittels seiner Nabe auf dem Aufnahmeabschnitt des Grundkörpers befestigt ist. Das Gebläserad weist insbesondere einen an der Nabe anschließenden topfförmigen Haltekörper auf. Die Schaufeln des Gebläserads sind vorzugsweise an einer Umfangswand des Haltekörpers befestigt. Der topfförmige Haltekörper erstreckt sich vorzugsweise koaxial zur Drehachse in Richtung vom Aufnahmeabschnitt in Richtung zum ersten Ende des Grundkörpers des Fräswerkzeuges. Dabei überragt der topfförmige Haltekörper insbesondere zumindest teilweise den Schaft des Fräswerkzeuges. Bevorzugt ist der topfförmige Haltekörper dabei so ausgebildet, dass beim Spannen des Fräswerkzeugs an seinem Schaft in einer Werkzeugaufnahme die Spindelnase in den topfförmigen Abschnitt hineinragt, ohne den topfförmigen Haltekörper zu kontaktieren. In eingespanntem Zustand des Fräswerkzeuges sind in Richtung von der Drehachse radial nach außen verlaufend zuerst der Schaft des Fräswerkzeuges, anschließend die Spindelnase und zuletzt der Haltekörper des Gebläserads angeordnet. Diese Ausbildung des topfförmigen Haltekörpers ermöglicht ein Spannen des Fräswerkzeuges an einem Abschnitt des Schaftes, der sich innerhalb des topfförmigen Haltekörpers befindet. Somit kann eine kurze und kompakte Bauform des Fräswerkzeuges realisiert werden. Dies hat wiederum den Vorteil, dass das Fräswerkzeug eine hohe Widerstandsfähigkeit, insbesondere gegenüber Biegekräften, aufweist und zugleich hohe Schwenkwinkel bei der Fräsbearbeitung realisiert werden können.

Vorzugsweise ist an der Nabe ein dem Schaft zugewandter Anschlag vorgesehen. Der Anschlag dient zur Begrenzung der Einspanntiefe beim Spannen des Fräswerkzeuges in einer Werkzeugaufnahme einer Frässpindel. Dadurch wird sichergestellt, dass das Fräswerkzeug mit jedem Einspannvorgang über eine konstante Einspanntiefe in der Werkzeugaufnahme gehalten ist.

Es ist vorzugsweise vorgesehen, dass das Gebläserad einen Vorraum umfasst, wobei der Vorraum durch die Nabe, durch einen Boden des Haltekörpers sowie durch die Umfangswand des Haltekörpers begrenzt ist. Beim Spannen des Fräswerkzeugs fährt die Spindel mit ihrer Werkzeugaufnahme in Richtung zum Fräswerkzeug, bis die Werkzeugaufnahme den Anschlag der Nabe kontaktiert. Die Werkzeugaufnahme und das Fräswerkzeug sind in etwa koaxial zueinander ausgerichtet. Um gewährleisten zu können, dass das Werkzeug ordnungsgemäß eingespannt ist, darf der Anschlag der Nabe keine Verschmutzungen, beispielsweise Späne und dgl., aufweisen. Derartige Verschmutzungen würden sich zwischen dem Anschlag des Fräswerkzeuges und der Werkzeugaufnahme festsetzen. Eine derartige Verschmutzung könnte eine zu geringe Einspanntiefe oder sogar eine Schrägstellung des Fräswerkzeuges bezogen auf die Werkzeugaufnahme zur Folge haben. Das Fräswerkzeug und die Frässpindel wären zueinander nicht mehr koaxial ausgerichtet, wodurch das Fräswerkzeug sowie das Werkstück beschädigt werden können.

Um die oben genannten Nachteile zu vermeiden, umfasst das Gebläserad vorzugsweise einen Vorraum, wobei der Vorraum als Reservoir für Späne oder andere Verschmutzungen dient. Gelangen in Betrieb des Fräswerkzeuges Partikel in das Gebläserad, würden diese bis in den Vorraum fallen ohne auf dem Anschlag der Nabe liegen zu bleiben. Somit ist sichergestellt, dass der Anschlag der Nabe frei von Verschmutzungen bleibt, wodurch ein ordnungsgemäßes Einspannen des Fräswerkzeuges ermöglicht ist. Der Vorraum ist vorzugsweise durch mehrere radial zur Drehachse verlaufende Rippen zur Versteifung des Haltekörpers unterteilt. Durch die Rippen wird einerseits eine ausreichende Steifigkeit des Haltekörpers sichergestellt, andererseits bietet der Vorraum noch ausreichend Volumen zur Aufnahme entsprechender Verschmutzungen des Gebläserads. In einer besonders bevorzugten Ausführungsform des Fräswerkzeuges umfasst der topfförmige Haltekörper mindestens eine Durchlassöffnung zum Ablauf von Flüssigkeiten aus dem Vorraum. Besonders vorteilhaft ist für jede Unterteilung des Vorraums eine Durchlassöffnung vorgesehen. Die mindestens eine Durchlassöffnung ist vorzugsweise am Boden des Haltekörpers ausgebildet, wodurch Flüssigkeiten aus dem Vorraum durch die Durchlassöffnung in die Umgebung abfließen können.

Vorzugsweise ist die Umfangswand des Haltekörpers dazu ausgebildet, in eingespanntem Zustand des Fräswerkzeuges eine Frässpindel umfangsseitig zumindest teilweise zu umgreifen. Insbesondere die Spindelnase der Frässpindel wird durch die Umfangswand des Haltekörpers abgeschirmt. Dadurch sind die Mechanik der Werkzeugaufnahme und/oder die Spindellagerung vor Spänen und Staub geschützt.

Es ist vorzugsweise vorgesehen, dass das Gebläserad einen Außenring umfasst, wobei der Außenring die Schaufeln des Gebläserads umgreift. Der Außenring ist an den Schaufeln, vorzugsweise an deren radial, äußeren Enden befestigt. Der Außenring verbindet die Schaufeln miteinander, wodurch die Schaufeln gegenseitig versteift sind. In anderen Worten sind die Schaufeln an ihren radial zur Drehachse äußeren Enden durch den Außenring miteinander verbunden, so dass sich die Schaufeln über den Außenring gegenseitig abstützen. Durch die erhöhte Steifigkeit sind die Schaufeln auch bei hohen Drehzahlen des Fräswerkzeuges formstabil.

Ein weiterer Vorteil des Außenringes besteht darin, dass die Luftströmung zumindest teilweise daran gehindert wird, radial zur Drehachse nach außen zu strömen. Zudem begünstigt der Außenring die Ausbildung eines hohen Druckpotenzials zwischen Unterseite und Oberseite der Schaufeln. Bei Drehung des Fräswerkzeuges weist die Unterseite einer Schaufel einen deutlich höheren Druck als die Oberseite derselben Schaufel auf. An dem radial äußeren Ende der Schaufel neigt die Luft von der Unterseite der Schaufel zur Oberseite der Schaufel zu strömen, um einen Druckausgleich zu erzielen. Der Außenring hingegen unterbindet das Überströmen von Unterseite zur Oberseite, wodurch ein hohes Druckpotenzial bestehen bleibt. Somit wird die Ausströmgeschwindigkeit in Richtung der Schneide des Werkzeuges erhöht.

Es ist insbesondere vorgesehen, dass das Gebläserad eine der Schneide des Grundkörpers abgewandte, erste Stirnseite umfasst, wobei der in Richtung der Drehachse gemessene Abstand zwischen den Schaufeln und der ersten Stirnseite des Gebläserads kleiner ist als der in Richtung der Drehachse gemessene Abstand zwischen dem Außenring und der ersten Stirnseite des Gebläserads. Somit wird in Betrieb des Fräswerkzeuges ein Luftspalt zwischen dem Außenring und der Frässpindel sichergestellt. Dadurch kann das Gebläserad die Luft über den Luftspalt von radial außen ansaugen und in Axialrichtung ausstoßen.

Das Gebläserad weist in einer Ansicht radial zur Drehachse des Grundkörpers eine kegelförmige Außenkontur auf. Insbesondere beim Verschwenken des Fräswerkzeuges ist darauf zu achten, dass das Fräswerkzeug nicht mit dem Werkstück oder mit Teilen der Dentalfräsmaschine kollidiert. Durch die kegelförmige Ausgestaltung der Außenkontur erhöht sich die Bewegungsfreiheit des Fräswerkzeugs, wodurch das Kollisionspotenzial reduziert ist.

Vorzugsweise erstreckt sich die Schaufel entlang einer Profilmittellinie von einer Nasenkante zu einer Endkante. In Blickrichtung senkrecht auf ein Profil der Schaufel schließt eine erste Tangente an der Profilmittellinie in der Nasenkante der Schaufel mit der Drehachse des Grundkörpers einen Winkel ein, wobei der Winkel vorzugsweise in einem Bereich von 90° bis 130°, insbesondere in einem Bereich von 100° bis 120° liegt. In Blickrichtung senkrecht auf ein Profil der Schaufel schließt eine zweite Tangente an der Profilmittellinie in der Endkante der Schaufel mit der Drehachse des Grundkörpers einen Winkel ein, wobei der Winkel in einem Bereich vorzugsweise von 0° bis 20°, insbesondere in einem Bereich von 5° bis 15° liegt. Durch diese Ausgestaltung der Schaufel wird der Luftstrom über den Luftspalt zwischen Außenring und Spindelnase in eine Richtung vom Gebläserad zur Schneide des Fräswerkzeuges hin umgelenkt. Durch den Luftstrom kann gezielt der Bearbeitungsbereich auf dem Werkstück frei von Staub und Spänen gehalten werden.

Weitere Merkmale der Erfindung ergeben sich aus der Beschreibung und der Zeichnung, in der ein nachfolgend im Einzelnen beschriebenes Ausführungsbeispiel der Erfindung dargestellt ist. Es zeigen:
- Fig. 1: in schematischer Ansicht eine Dentalfräsmaschine,
- Fig. 2: in einer perspektivischen Darstellung von vorne ein Fräswerkzeug mit Gebläserad,
- Fig. 3: in einer perspektivischen Darstellung von hinten ein Fräswerkzeug mit Gebläserad,
- Fig. 4: in einer Ansicht von oben das Fräswerkzeug nach Fig. 2 mit Rippen am Gebläserad,
- Fig. 5: in einer seitlichen Schnittdarstellung das Fräswerkzeug entlang der Schnittlinien zwischen den Pfeilen V nach Fig. 4,
- Fig. 6: in einer Seitendarstellung das Werkzeug nach Fig. 2,
- Fig. 7: das Profil einer Schaufel eines Gebläserads des Werkzeugs nach Fig. 2,

- Fig. 8: in einer Seitendarstellung die Frässpindel mit geschnittenem Fräswerkzeug,
- Fig. 9: eine vergrößerte Darstellung des geschnittenen Fräswerkzeugs nach Fig. 8 und
- Fig. 10: in einer Ansicht von oben eine alternative Ausbildung des Fräswerkzeugs mit Durchlassöffnungen.

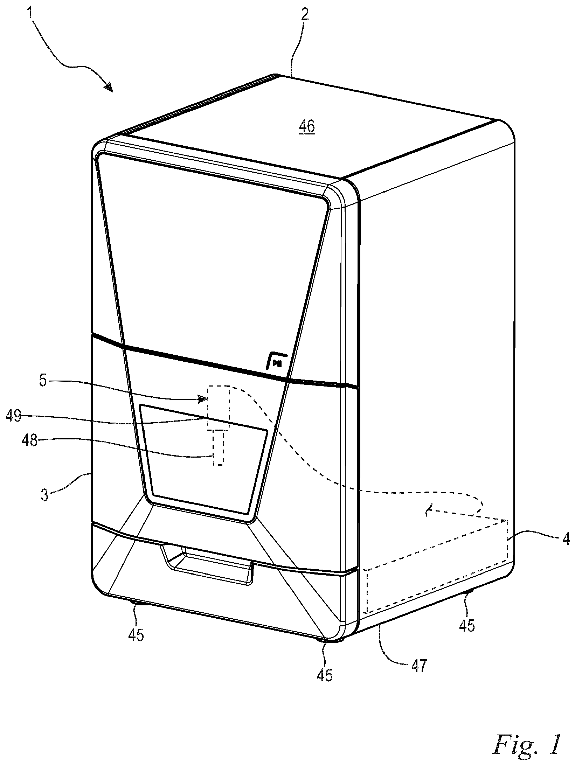

In Fig. 1 ist eine Dentalfräsmaschine 1 gezeigt. Die Dentalfräsmaschine 1 ist zur Herstellung eines Zahnersatzes, insbesondere zum Fertigen von Kronen und Brücken vorgesehen. Die Dentalfräsmaschine 1 weist ein Gehäuse 2 mit einer Ladeklappe 3 auf. Das Gehäuse 2 begrenzt einen Innenraum der Dentalfräsmaschine 1. Nach Öffnen der Ladeklappe 3 ist der Zugang zu dem Innenraum der Dentalfräsmaschine 1 offen, so dass beispielsweise ein Rohling eingelegt oder herausgenommen werden kann. Das Gehäuse 2 der Bearbeitungsmaschine weist eine Oberseite 46 und eine Unterseite 47 auf. An der Unterseite 47 der Dentalfräsmaschine sind mehrere Standfüße 45 angeordnet, wobei die Dentalfräsmaschine 1 auf ihren Standfüßen 45 abgestellt ist. Der Begriff "oben" gibt eine von der Unterseite 47 zur Oberseite 46 der Dentalfräsmaschine 1 verlaufende Richtung an. Der Begriff "unten" bezeichnet eine von der Oberseite 46 zur Unterseite 47 der Dentalfräsmaschine 1 verlaufende Richtung.

Wie in Fig. 1 schematisch dargestellt, ist in der Dentalfräsmaschine 1 eine Frässpindel 5 angeordnet. Die Frässpindel 5 umfasst einen Elektromotor 49 und eine vom Elektromotor angetriebene Spindel 48. Die Frässpindel 5 ist im bevorzugten Ausführungsbeispiel über ein nicht näher dargestelltes Antriebssystem im Raum translatorisch, vorzugsweise auch rotatorisch verstellbar. Ferner umfasst die Dentalfräsmaschine 1 eine in Fig. 1 lediglich schematisch dargestellte Steuereinrichtung 4. Die Steuereinrichtung 4 dient zur elektrischen Versorgung und Steuerung der Frässpindel 5 sowie dem Antriebssystem. Die Frässpindel 5 und das Antriebssystem sind insbesondere über einen elektrischen Anschluss mit der Steuereinrichtung 4 verbunden.

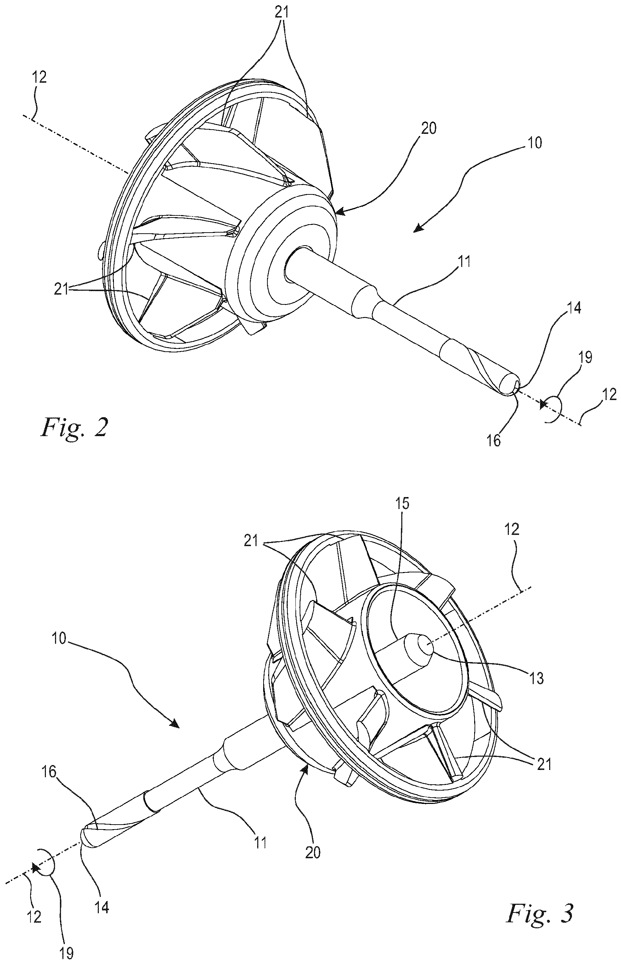

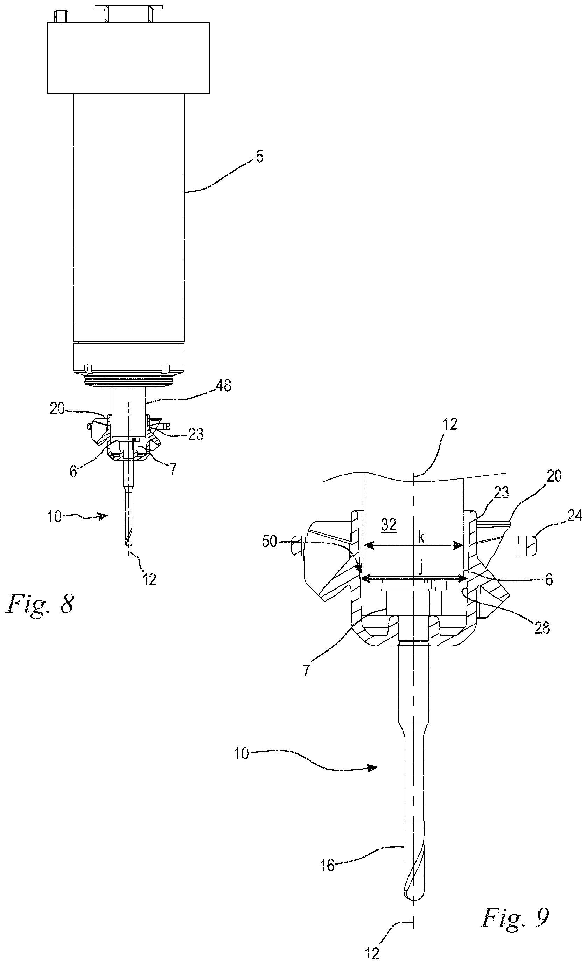

Die Figuren 2 und 3 zeigen das erfindungsgemäße Fräswerkzeug 10. Das Fräswerkzeug 10 umfasst einen Grundkörper 11 mit einer Drehachse 12. Die Drehachse 12 des Grundkörpers 11 entspricht auch der Längsachse des Grundkörpers 11. Der Grundkörper 11 erstreckt sich entlang seiner Drehachse 12 von einem ersten Ende 13 bis zu einem zweiten Ende 14. An dem ersten Ende 13 des Grundkörpers 11 ist ein Schaft 15 vorgesehen. Der Schaft 15 ist insbesondere an dem Grundkörper 11 ausgebildet. Der Schaft 15 dient zum Einspannen des Fräswerkzeugs 10 in einer Werkzeugaufnahme 7 (Figuren 8 und 9) der Frässpindel 5. An dem zweiten Ende 14 des Grundkörpers 11 ist eine Schneide 16 vorgesehen. Die Schneide 16 ist vorzugsweise an dem Grundkörper 11 ausgebildet. Die Schneide 16 des Grundkörpers 11 dient zur Abtragung von Spänen am Werkstück.

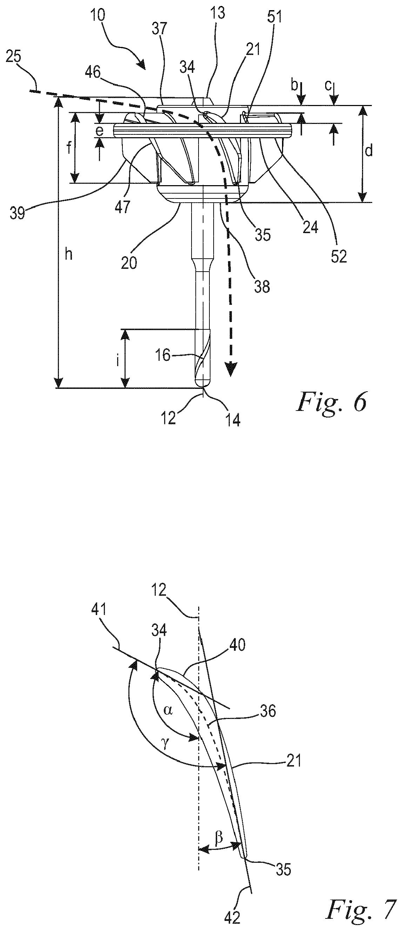

Wie in Fig. 6 gezeigt, beginnt im Ausführungsbeispiel die Schneide 16 am zweiten Ende 14 des Grundkörpers 11 und erstreckt sich in Richtung zum ersten Ende 13 entlang einer Schneidenlänge i, wobei die Scheidenlänge i in Richtung der Drehachse 12 gemessen mindestens 5%, vorzugsweise mindestens 10%, insbesondere in etwa 20% der Gesamtlänge h des Grundkörpers 11 entspricht. Die Gesamtlänge h des Grundkörpers 11 entspricht dem in Richtung der Drehachse 12 gemessenem Abstand h zwischen dem ersten Ende 13 und dem zweiten Ende 14. In alternativen Ausführungsformen kann es zweckmäßig sein, die Schneide 16 auch anders auszugestalten.

In den Figuren 2 und 3 ist eine Drehrichtung 19 des Fräswerkzeuges 10 gezeigt. In dem für das Werkzeug 10 vorgesehenen, bestimmungsgemäßen Betrieb ist das Werkzeug 10 um die Drehachse 12 in Drehrichtung 19 drehend angetrieben. Der bestimmungsgemäße Betrieb ist der Betrieb des Fräswerkzeugs 10, in welchem eine Spanabtragung durch die Schneide 16 am Werkstück erfolgt. Wird das Fräswerkzeug 10 in einer der Drehrichtung 19 entgegengesetzten Drehrichtung angetrieben, ist eine Spanabtragung nicht möglich. Im vorliegenden Ausführungsbeispiel ist das Fräswerkzeug 10 als rechtsdrehendes Werkzeug ausgebildet. Selbstverständlich kann in einer alternativen Ausführung das Fräswerkzeug 10 auch als linksdrehendes Werkzeug ausgebildet sein.

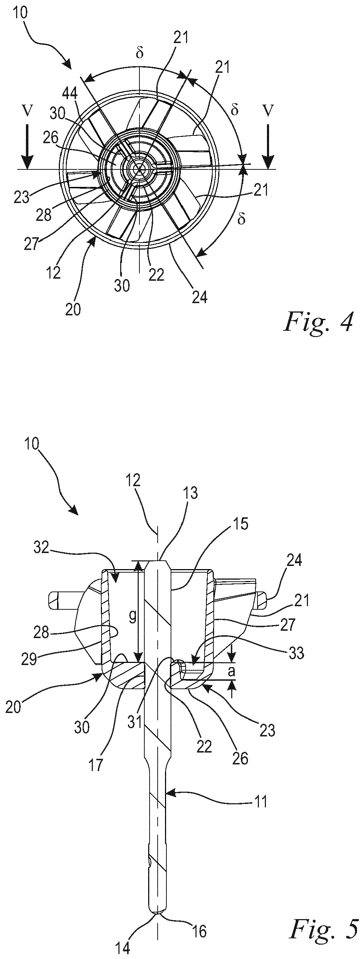

Wie in den Figuren 2 und 3 gezeigt, umfasst das Fräswerkzeug 10 ein Gebläserad 20. Das Gebläserad 20 ist koaxial zum Grundkörper 11 des Fräswerkzeugs 10 ausgerichtet. Das Gebläserad 20 ist auf einem Aufnahmeabschnitt 17 (Fig. 5) des Grundkörpers 11 befestigt. Der Aufnahmeabschnitt 17 ist zwischen dem Schaft 15 und der Schneide 16 angeordnet. Im bevorzugten Ausführungsbeispiel schließt der Aufnahmeabschnitt 17 unmittelbar an dem Schaft 15 an. Das Gebläserad 20 ist mit dem Grundkörper 11 drehfest verbunden. Im bevorzugten Ausführungsbeispiel ist das Gebläserad 20 über eine Pressung auf dem Grundkörper 11 befestigt. Demnach ist das Gebläserad 20 sowohl rotatorisch als auch axial mit dem Grundkörper 11 fest verbunden. Im bevorzugten Ausführungsbeispiel ist das Gebläserad 20 aus einem Kunststoff ausgebildet. In einer alternativen Ausführungsform kann es zweckmäßig sein, dass das Gebläserad 20 aus einem anderen Werkstoff gebildet ist.

Der Grundkörper 11 des Fräswerkzeuges 10 ist vorzugsweise aus einem Metallwerkstoff gebildet. Die Schneide 16 des Fräswerkzeuges 10 besteht im Ausführungsbeispiel ebenfalls aus einem Metallwerkstoff, insbesondere aus einem Hartmetall. In einer alternativen Ausführung des Fräswerkzeuges 10 kann die Schneide 16 auch aus einem anderen hochfesten Werkstoff ausgebildet sein. Die Schneide 16 ist im bevorzugten Ausführungsbeispiel unmittelbar an dem Grundkörper 11 ausgebildet. In einer alternativen Ausführung kann es jedoch auch zweckmäßig sein, die Schneide 16 als ein vom Grundkörper 11 separates Bauteil auszubilden, wobei das Bauteil auf dem Grundkörper 11 befestigt ist.

Wie in den Figuren 2 und 3 gezeigt, umfasst das Gebläserad 20 mehrere Schaufeln 21. In Umfangsrichtung der Drehachse 12 benachbarte Schaufeln 20 sind in gleichmäßigen Winkelabständen δ bezogen auf die Umfangsrichtung der Drehachse 12 zueinander angeordnet (Fig. 4). Im Ausführungsbeispiel umfasst das Gebläserad 20 sechs Schaufeln 21. Demnach beträgt der Winkelabstand δ zwischen zwei benachbarten Schaufeln 21 60°. Es kann in einer alternativen Ausführung des Fräswerkzeugs 10 zweckmäßig sein, weniger oder mehr Schaufeln 21 vorzusehen.

In Fig. 5 ist eine Schnittdarstellung des Fräswerkzeuges 10 entlang der Schnittlinie zwischen den Pfeilen V gemäß Fig. 4 gezeigt. Wie Fig. 5 zeigt, umfasst das Gebläserad 20 eine Nabe 22. Das Gebläserad 20 ist mittels der Nabe 22 auf dem Grundkörper 11, insbesondere auf dem Aufnahmeabschnitt 17 des Grundkörpers 11, drehfest gehalten. Im bevorzugten Ausführungsbeispiel ist die Nabe 22 auf den Grundkörper 11 aufgepresst. In einer alternativen Ausführung kann es zweckmäßig sein, anstelle des Presssitzes eine andere Befestigungsart zu wählen. An die Nabe 22 des Gebläserads 20 schließt ein Haltekörper 23 an. An dem Haltekörper 23 sind die Schaufeln 21 des Gebläserads 20 angeordnet. Der Haltekörper 23 umfasst einen Boden 26 und eine Umfangswand 27. Der Boden 26 erstreckt sich ausgehend von der Nabe 22 bezüglich der Drehachse 12 radial nach außen. An dem bezüglich der Drehachse 12 äußeren Ende des Bodens 26 schließt die Umfangswand 27 an. Die Umfangswand 27 erstreckt sich in etwa zylinderförmig in Richtung vom zweiten Ende 14 zum ersten Ende 13 hin. Der Boden 26 des Haltekörpers 23 ist dem zweiten Ende 14 des Grundkörpers 11 zugewandt. In Richtung zum ersten Ende 13 des Grundkörpers 11 hin ist der Haltekörper 23 geöffnet. Der Haltekörper 23 ist topfförmig ausgebildet.

Im bevorzugten Ausführungsbeispiel sind die Nabe 22 und der Haltekörper 23 einteilig ausgebildet. Es kann auch vorgesehen sein, die Nabe 22 und den Haltekörper 23 mehrteilig auszubilden. Die Schaufeln 21 sind an der Umfangswand 27, insbesondere an der Außenseite 29 der Umfangswand 27 ausgebildet. Die Umfangswand 27 umfasst eine Innenseite 28 und die Außenseite 29. Die Innenseite 28 der Umfangswand 27 ist der Drehachse 12 des Grundkörpers 11 zugewandt. Die Außenseite 29 der Umfangswand 27 ist der Drehachse 12 des Grundkörpers 11 abgewandt.

Wie in den Figuren 4 und 5 gezeigt, sind im Gebläserad 20 mehrere Rippen 30, insbesondere drei Rippen 30 vorgesehen. Die Rippen 30 erstrecken sich von der Nabe 22 des Gebläserads 20 bezogen auf die Drehachse 12 radial nach außen bis zur Innenseite 28 der Umfangswand 27. Die Rippen 30 sind in Umfangsrichtung der Drehachse 12 derart zueinander verteilt, dass benachbarte Rippen 30 in Umfangsrichtung der Drehachse 12 gleichmäßige Winkelabstände aufweisen. Die Rippen 30 sind zudem mit dem Boden 26 des Haltekörpers 23 verbunden.

Wie in Fig. 5 gezeigt, ist an dem dem Schaft 15 des Grundkörpers 11 zugewandten Ende der Nabe 22 ein Anschlag 31 ausgebildet. Beim Einspannen des Fräswerkzeugs 10 in eine Werkzeugaufnahme 7 der Frässpindel 5 begrenzt der Anschlag 31 die in Richtung der Drehachse 12 gemessene Einspanntiefe g des Fräswerkzeuges 10. Das Gebläserad 20 umfasst einen Vorraum 33 und einen Innenraum 32. Der Vorraum 33 ist durch die Nabe 22, den Boden 26 des Haltekörpers 23 sowie zumindest teilweise durch die Innenseite 28 der Umfangswand 27 begrenzt. Unmittelbar an dem Vorraum 33 schließt der Innenraum 23 an, der lediglich durch die Innenseite 28 der Umfangswand 27 sowie durch den Schaft 15 des Grundkörpers 11 begrenzt ist. Der Vorraum 33 dient dazu, Späne oder andere Verschmutzungen des Gebläserads aufzunehmen, so dass sich diese nicht auf dem Anschlag 31 der Nabe 22 festsetzen können. Somit wird gewährleistet, dass beim Einspannen des Fräswerkzeugs 10 zwischen der Werkzeugaufnahme 7 der Frässpindel 5 und dem Anschlag 31 der Nabe 22 keine Partikel wie Staub oder Späne eingespannt werden, die die Funktion des Fräswerkzeuges 10 beeinträchtigen.

Wie in den Figuren 4 und 5 gezeigt, umfasst das Gebläserad einen Außenring 24. Der Außenring 24 umgreift in Umfangsrichtung der Drehachse 12 die Schaufeln 21. Der Außenring 24 ist an der radial zur Drehachse 12 ausgebildeten Außenseite 44 der Schaufeln 21 angeordnet. Die Außenseiten 44 der Schaufeln 21 bilden das bezogen auf die Drehachse 12 radial äußere Ende der Schaufeln 21. Der Außenring 24 verbindet die Schaufeln 21 an ihren Außenseiten 44 miteinander. Der Außenring 24 versteift die Anordnung der Schaufelräder 21 zueinander. Durch die Versteifung der Schaufeln 21 ist das Gebläserad 20 auch bei hohen Drehzahlen formstabil.

Im bevorzugten Ausführungsbeispiel ist das Gebläserad 20, bestehend aus der Nabe 22, dem Haltekörper 23, den Schaufeln 21 und dem Außenring 24, einteilig ausgebildet. Vorzugsweise ist das Gebläserad 20 ein Spritzgussteil. In einer alternativen Ausführung des Gebläserads 20 kann dieses auch mehrteilig ausgebildet sein.

Wie in Fig. 6 gezeigt, umfasst das Gebläserad 20 eine dem ersten Ende 13 des Grundkörpers 11 zugewandte erste Stirnseite 37 und eine dem zweiten Ende 14 des Grundkörpers 11 zugewandte zweite Stirnseite 38. Die erste Stirnseite 37 bildet das obere Ende des Gebläserads 20; die zweite Stirnseite 38 bildet das untere Ende des Gebläserads 20. Demnach erstreckt sich das Gebläserad 20 über eine Länge d, die dem Abstand zwischen der ersten Stirnseite 37 des Gebläserads 20 und der zweiten Stirnseite 38 des Gebläserads 20 entspricht. Der Außenring 24 ist derart an den Schaufeln 21 angeordnet, dass zwischen dem Außenring 24 und der ersten Stirnseite 37 ein in Richtung der Drehachse 12 gemessener Abstand c vorgesehen ist. Durch den Abstand c zwischen dem Außenring 24, insbesondere einer dem ersten Ende 13 des Grundkörpers 11 zugewandten Oberseite 51 des Außenrings 24, und der ersten Stirnseite 37 des Gebläserads 20 wird sichergestellt, dass auch in einem in der Frässpindel 5 eingespanntem Zustand des Fräswerkzeuges 10 ein Luftspalt 43 zwischen dem Außenring 24 und der Frässpindel 10 ausgebildet ist. Demnach bildet der Abstand c die Mindesthöhe des Luftspaltes 43. Dieser Luftspalt 43 ermöglicht ausreichend Luftzufuhr, auch wenn sich eine Spindelnase 6 der Spindel 48 bis zur Stirnseite 37 des Gebläserads 20 und radial zur Drehachse 12 bis zum Außenring 24 erstrecken würde. Überragt die Spindel 48 radial zur Drehachse 12 die Schaufeln 21, insbesondere den Außenring 24, ist eine axiale Luftzufuhr zum Gebläserad 20 nicht mehr möglich. Durch den Luftspalt 43 ist sichergestellt, dass das Gebläserad 20 radial zur Drehachse ausreichend Luft ansaugen kann. Demnach strömt die Luft oberhalb des Außenrings 24 radial zu den Schaufeln 21 des Gebläserads 20 hin. Die Schaufeln 21 leiten die radial angesaugte Luft in axialer Richtung parallel zur Drehachse 12 um. Die Luft strömt aus dem Gebläserad 20 in Richtung zum zweiten Ende 14 des Grundkörpers 11. Daraus ergibt sich ein Luftstrom 25, der radial zur Drehachse 12 angesaugt wird und durch das Gebläserad 20 in Richtung zum zweiten Ende 14 des Grundkörpers 11 strömt.

Zum Ansaugen eines radial zur Drehachse 12 gerichteten Luftstroms 25 überragen die Schaufeln 21 den Außenring 24 in Richtung der Drehachse 12 zum Schaft 15 hin. Demnach ist der Abstand c zwischen der Oberseite 51 des Außenrings 24 und der ersten Stirnseite 37 des Gebläserads 20 größer als der in Richtung der Drehachse 12 gemessene Abstand b zwischen einer Profiloberseite 46 der Schaufeln 21 und der ersten Stirnseite 37 des Gebläserads 20. Die Schaufeln 21 weisen jeweils die dem ersten Ende 13 des Grundkörpers 11 zugewandte Profiloberseite 46 und eine dem zweiten Ende 14 des Grundkörpers 11 zugewandte Profilunterseite 47 auf.

In Betrieb des Fräswerkzeuges 10 wird der Luftstrom 25 über das Gebläserad 20 in Richtung zum zweiten Ende 14 des Grundkörpers 11 geleitet. Aufgrund der Drehung des Gebläserads 20 wirken auch Fliehkräfte auf den Luftstrom 25. Der Außenring 24 dient auch als Luftleitelement, so dass die Luft zumindest teilweise nicht nach radial außen wegströmen kann. Somit wird der Luftstrom 25 durch den Außenring 24 in Richtung zum zweiten Ende 14 des Grundkörpers 11 gleitet.

Ein weiterer Effekt des Außenrings 24 besteht darin, dass ein Überströmen an den Außenseiten 44 der Schaufeln 21 von der Profilunterseite 47 auf die Profiloberseite 46 vermieden wird. Somit kann ein höheres Druckpotenzial zwischen Profiloberseite 46 und Profilunterseite 47 erzeugt werden, wodurch wiederum eine erhöhte Effektivität des Gebläserads 20 erzielt werden kann.

In Fig. 7 ist ein Profil 40 einer Schaufel 21 gezeigt. Das Profil 40 erstreckt sich von einer Nasenkante 34 entlang einer Profilmittellinie 36 bis zur Endkante 35. In einer Ansicht radial zur Drehachse 12 schließt die an der Nasenkante 34 an der Profilmittellinie 36 anliegende Tangente 41 mit der Drehachse 12 einen Winkel α ein. Der Winkel α liegt in einem Bereich von 90° bis 130°, insbesondere in einem Bereich von 100° bis 120°. Eine an der Profilmittellinie 36 an der Endkante 35 anliegende zweite Tangente 42 schließt mit der Drehachse 12 in Blickrichtung radial zur Drehachse 12 einen Winkel β ein. Der Winkel β liegt zwischen 0° und 20°, insbesondere zwischen 5° und 15°. Die Summe von Winkel α und Winkel β bildet den Winkel γ. Der Winkel γ ist allgemein als Anstellwinkel eines Profils 40 bekannt. Der Anstellwinkel γ ist größer als der Winkel α und größer als der Winkel β. Durch diese gezielte Winkelstellung wird die Strömung aus einer nahezu horizontalen Anströmung des Profils 40 in eine zur Drehachse 12 nahezu parallel verlaufende Ausströmung an der Endkante 35 umgeleitet. Dadurch kann eine gezielte Luftströmung in Richtung der Drehachse 12 auf das Werkstück oder auf die zu reinigenden Teile der Dentalfräsmaschine 1 gelenkt werden. Die Schaufeln 21 des vorliegenden Gebläserads 20 sind derart ausgerichtet, so dass das Gebläserad 20 lediglich für ein rechtsdrehendes Fräswerkzeug 10 einen Luftstrom verlaufend von der Nasenkante 34 zur Endkante 35 ausbildet. Für ein linksdrehendes Werkzeug ist zum einen die Schneide 16 und zum anderen die Ausrichtung der Schaufeln 16 anzupassen.

Wie in Fig. 6 gezeigt, weisen die Schaufeln 21 eine Schaufellänge f auf, wobei die Schaufellänge f dem in Richtung der Drehachse 12 gemessenem Abstand zwischen der Nasenkante 34 und der Endkante 35 entspricht. Der Außenring weist eine Dicke e auf, die dem in Richtung der Drehachse 12 gemessenem Abstand zwischen der Oberseite 51 und einer Unterseite 52 des Außenrings 24 entspricht. Die Oberseite 52 des Außenrings 24 ist dem zweiten Ende 14 des Grundkörpers 11 zugewandt. Die Schaufellänge f ist geringer als die Länge d des Gebläserads 20. Die Schaufellänge f beträgt mindestens 50%, vorzugsweise mindestens 70% der Länge d des Gebläserads d. Die Dicke e des Außenrings 24 entspricht mindestens 10%, insbesondere mindestens 15% der Schaufellänge f. Die Dicke e des Außenrings 24 entspricht höchstens 50%, insbesondere höchstens 30% der Schaufellänge f. Die Länge d des Gebläserads 20 liegt in einem Bereich von 10% bis 40%, insbesondere in einem Bereich von 20% bis 35% der Gesamtlänge h des Fräswerkzeuges 10.

Wie in Fig. 6 gezeigt, weist das Gebläserad 20 in einer Blickrichtung radial zur Drehachse 12 eine kegelförmige Außenkontur 39 auf. Die kegelförmige Außenkontur 39 wird durch eine Abschrägung der Schaufeln 21 sowie eine Abschrägung eines unteren Teilbereichs des Haltekörpers 23 erzeugt. Durch die kegelförmige Außenkontur 39 ist die Kollisionsgefahr beim Verschwenken des Fräswerkzeuges 10 mit dem Werkstück reduziert.

In Fig. 8 ist eine Frässpindel 5 einer Dentalfräsmaschine 1 gezeigt. Die Frässpindel 5 umfasst die von dem Elektromotor 49 angetriebene Spindel 48, wobei die Spindel 48 an ihrem unteren Ende eine Spindelnase 6 aufweist. Wie in Fig. 8 gezeigt, umgreift das Gebläserad 20 die Spindelnase 6. Das Gebläserad 20 ist derart ausgebildet, dass die Spindelnase 6 zumindest teilweise im Innenraum 32 des Haltekörpers 23 des Gebläserads 20 liegt. Demnach ist der Innendurchmesser j des Haltekörpers 23 größer als der Außendurchmesser k der Spindelnase 6. Der Innendurchmesser j des Haltekörpers 23 bezieht sich auf die Innenseite 28 des Haltekörpers 23. Der Haltekörper 23 und die Spindelnase 6 sind derart zueinander angeordnet, dass diese einen Dichtspalt 50 aufweisen. Die Breite des Dichtspaltes entspricht höchstens 10%, vorzugsweise höchstens 5% des Außendurchmessers k der Spindelnase 6. Dadurch ist die Spindelnase 6 vor Verunreinigungen, wie Späne oder Staub, geschützt.

Im bevorzugten Ausführungsbeispiel erstreckt sich der Haltekörper in etwa über die Länge des Schaftes 15, also in etwa über die Einspanntiefe g. Die topfförmige Ausgestaltung des Haltekörpers 23 ermöglicht ein Übergreifen der Spindelnase 6, so dass beim Spannen des Fräswerkzeuges über die gesamte Einspanntiefe g die Spindelnase 6 in den topfförmigen Haltekörper 23 geführt werden kann, ohne diesen zu berühren. Somit weist das Fräswerkzeug 10 trotz des Gebläserads 20 eine in Richtung der Drehachse 12 kompakte Bauform auf.

Besonders vorteilhaft ist der Einsatz des Fräswerkzeuges 10 mit dem Gebläserad 20 bei Fräsvorgängen, die besonders viel Späne und/oder Staub verursachen, beispielsweise beim Schruppen des Werkstückes. Selbstverständlich kann das Fräswerkzeug 10 mit dem Gebläserad 20 lediglich zur Reinigung des Werkstückes und/oder der Dentalfräsmaschine 1 verwendet werden. Ein Kontakt mit dem Werkstück bzw. ein Spanabtrag ist nicht erforderlich. So kann nach entsprechenden Fertigungsvorgängen das erfindungsgemäße Fräswerkzeug 10 in der Werkzeugaufnahme 7 aufgenommen werden und Verschmutzungen des Werkstückes und/oder der Dentalfräsmaschine 1 ausgeblasen werden. Die aufgeblasenen Späne und/oder Staub können durch eine nicht näher dargestellte Absauganlage aus der Dentalfräsmaschine abgesaugt werden. Über die Steuerung 4 der Dentalfräsmaschine 1 können gezielte Verfahrwege der Frässpindel 5 eingestellt werden, um die Reinigung durch den vom Gebläserad 20 erzeugten Luftstrom 25 zu optimieren.

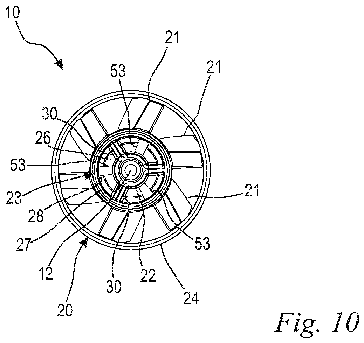

In Fig. 10 ist eine alternative, ebenfalls erfindungsgemäße Ausgestaltung des Fräswerkzeuges 10 gezeigt. Diese alternative Ausführungsform unterscheidet sich gegenüber dem Fräswerkzeug 10 nach den Fig. 2 bis 9 lediglich in der Ausbildung von drei Durchlassöffnungen 53 am Haltekörper 23. Die Durchlassöffnungen 53 sind an dem Haltekörper 23 ausgebildet und dienen zum Ablauf von Flüssigkeit aus dem Haltekörper 23. Die Durchlassöffnungen 53 sind insbesondere am Boden 26 des Haltekörpers 23 ausgebildet. Durch die Ausbildung von drei Rippen 30 weist der Haltekörper 23 auch eine Unterteilung von drei Vorräumen 33 auf, wobei im bevorzugten Ausführungsbeispiel für jeden der drei Vorräume 33 eine Durchgangsöffnung 53 zum Ablauf von Flüssigkeit vorgesehen ist. Somit kann eine Ansammlung von Flüssigkeiten in den Vorräumen 33 vermieden werden. Selbstverständlich kann es auch zweckmäßig sein, eine andere Anzahl an Durchlassöffnungen 53 vorzusehen. Die Durchgangsöffnungen 53 sind vorzugsweise um die Drehachse 12 in gleichmäßigen Winkelabständen verteilt angeordnet, wodurch eine Unwucht des Fräswerkzeuges 10 vermieden wird.

## Patentansprüche

1. Fräswerkzeug für eine Dentalfräsmaschine,
umfassend einen Grundkörper (11) mit einer Drehachse (12),
wobei sich der Grundkörper (11) entlang seiner Drehachse (12) von einem ersten Ende (13) bis zu einem zweiten Ende (14) erstreckt,
wobei an dem ersten Ende (13) des Grundkörpers (11) ein Schaft (15) zum Einspannen des Fräswerkzeuges (10) vorgesehen ist, und wobei an dem zweiten Ende (14) des Grundkörpers (11) eine Schneide (16) angeordnet ist, wobei an dem Grundkörper (11) zwischen dem Schaft (15) und der Schneide (15) ein Aufnahmeabschnitt (17) vorgesehen ist,
**dadurch gekennzeichnet, dass** an dem Aufnahmeabschnitt (17) des Grundkörpers (11) ein Gebläserad (20) angeordnet ist, wobei das Gebläserad (20) derart ausgebildet ist, dass bei Antrieb des Fräswerkzeuges (10) in einer zum Spanabtrag vorgesehenen Drehrichtung (19) durch das Gebläserad (20) ein Luftstrom (25) in Richtung vom Gebläserad (20) hin zur Schneide (16) des Fräswerkzeuges (10) erzeugt wird.

2. Fräswerkzeug nach Anspruch 1,
**dadurch gekennzeichnet, dass** das Gebläserad (20) mehrere Schaufeln (21) aufweist, wobei in Umfangsrichtung der Drehachse (12) benachbarte Schaufeln (21) in gleichmäßigem Winkelabstand um die Drehachse (12) des Grundkörpers (11) angeordnet sind.

3. Fräswerkzeug nach Anspruch 1 oder 2,
**dadurch gekennzeichnet, dass** das Gebläserad (20) eine Nabe (22) aufweist, wobei das Gebläserad (20) mittels seiner Nabe (22) auf dem Aufnahmeabschnitt (17) des Grundkörpers (11) befestigt ist.

4. Fräswerkzeug nach Anspruch 3;
**dadurch gekennzeichnet, dass** das Gebläserad (20) einen an der Nabe (22) anschließenden, topfförmigen Haltekörper (23) aufweist, wobei die Schaufeln (21) des Gebläserads (20) an einer Umfangswand (27) des Haltekörpers (23) befestigt sind.

5. Fräswerkzeug nach Anspruch 3 oder 4,
**dadurch gekennzeichnet, dass** an der Nabe (22) ein dem Schaft (15) zugewandter Anschlag (31) vorgesehen ist, der zur Begrenzung der Einspanntiefe (g) beim Spannen des Fräswerkzeuges (10) in einer Werkzeugaufnahme (7) einer Frässpindel (5) dient.

6. Fräswerkzeug nach einem der Ansprüche 3 bis 5,
**dadurch gekennzeichnet, dass** das Gebläserad (20) einen Vorraum (33) umfasst, wobei der Vorraum (33) durch die Nabe (22), durch einen Boden (26) des Haltekörpers (23) sowie durch die Umfangswand (27) des Haltekörpers (23) begrenzt ist.

7. Fräswerkzeug nach Anspruch 6,
**dadurch gekennzeichnet, dass** der Vorraum (33) durch mehrere radial zur Drehachse (12) verlaufende Rippen (30) zur Versteifung des Haltekörpers (23) unterteilt ist.

8. Fräswerkzeug nach einem der Ansprüche 4 bis 7,
**dadurch gekennzeichnet, dass** die Umfangswand (27) des Haltekörpers (23) dazu ausgebildet ist, in eingespanntem Zustand des Fräswerkzeuges (10) eine Frässpindel (5) umfangsseitig zumindest teilweise zu umgreifen.

9. Fräswerkzeug nach einem der Ansprüche 2 bis 8,
**dadurch gekennzeichnet, dass** das Gebläserad (20) einen Außenring (24) umfasst, wobei der Außenring (24) die Schaufeln (21) des Gebläserads (20) umgreift.

10. Fräswerkzeug nach Anspruch 9,
**dadurch gekennzeichnet, dass** das Gebläserad (20) eine der Schneide (16) des Grundkörpers (11) abgewandte, erste Stirnseite (37) umfasst, wobei der in Richtung der Drehachse (12) gemessene Abstand (b) zwischen den Schaufeln (21) und der ersten Stirnseite (37) des Gebläserads (20) kleiner ist als der in Richtung der Drehachse (12) gemessene Abstand (c) zwischen dem Außenring (24) und der ersten Stirnseite (37) des Gebläserads (20).

11. Fräswerkzeug nach einem der Ansprüche 1 bis 10,
**dadurch gekennzeichnet, dass** das Gebläserad (20) in einer Ansicht radial zur Drehachse (12) des Grundkörpers (11) eine kegelförmige Außenkontur (39) aufweist.

12. Fräswerkzeug nach einem der Ansprüche 2 bis 11,
**dadurch gekennzeichnet, dass** sich die Schaufel (21) entlang einer Profilmittellinie (36) von einer Nasenkante (34) zu einer Endkante (35) erstreckt.

13. Fräswerkzeug nach Anspruch 12,
**dadurch gekennzeichnet, dass** in Blickrichtung senkrecht auf ein Profil (40) der Schaufel (21) eine erste Tangente (41) an der Profilmittellinie (36) in der Nasenkante (34) der Schaufel (21) mit der Drehachse (12) des Grundkörpers (11) einen Winkel (a) einschließt, wobei der Winkel (a) in einem Bereich von 90° bis 130°, insbesondere in einem Bereich von 100° bis 120° liegt.

14. Fräswerkzeug nach Anspruch 12 oder 13,
**dadurch gekennzeichnet, dass** in Blickrichtung senkrecht auf ein Profil (40) der Schaufel (21) eine zweite Tangente (42) an der Profilmittelinie (36) in der Endkante (35) der Schaufel (21) mit der Drehachse (12) des Grundkörpers (11) einen Winkel (β) einschließt, wobei der Winkel (β) in einem Bereich von 0° bis 20°, insbesondere in einem Bereich von 5° bis 15° liegt.

15. Anordnung aus einer Frässpindel und einem Fräswerkzeug gemäß einem der Ansprüche 1 bis 14,
wobei das Fräswerkzeug (10) in einer Werkzeugaufnahme (7) der Frässpindel (5) gehalten ist, wobei das dem Fräswerkzeug (10) zugewandte, erste Ende (8) der Frässpindel (5) aus einer Spindelnase (6) gebildet ist, und wobei das Gebläserad (20) des Fräswerkzeuges (10) die Spindelnase (6) umfangsseitig zumindest teilweise umgreift.
